(19) Europäisches Patentamt

European Patent Office

Office européen des brevets

(11) Publication number: **0 541 107 A1**

## EUROPEAN PATENT APPLICATION

(21) Application number: **92119029.4**

(22) Date of filing: **06.11.92**

(51) Int. Cl.5: **C08J 5/06**, C08L 63/00, D06M 15/55

(30) Priority: **06.11.91 US 788664**

(43) Date of publication of application: **12.05.93 Bulletin 93/19**

(84) Designated Contracting States: **DE ES FR GB IT**

(71) Applicant: **BRIDGESTONE CORPORATION**
**10−1 Kyobashi 1−Chome, Chuo−Ku**
**Tokyo 104(JP)**

(72) Inventor: **Hergenrother, William L.**
**195 Dorchester Road**
**Akron, Ohio 44313(US)**
Inventor: **Detrano, Mario N.**
**7549 Celina Street**
**Massillon, Ohio 44646(US)**

(74) Representative: **Kraus, Walter, Dr.**
**Patentanwälte Kraus, Weisert & Partner**
**Thomas−Wimmer−Ring 15**
**W−8000 München 22 (DE)**

(54) **Ultraviolet light curable adhesive active finish for reinforcing members and related methods.**

(57) An ultraviolet light curable, adhesive active finish composition for synthetic reinforcing members to bond the latter to vulcanizable rubber includes 100 parts by weight of an ultraviolet light curable, liquid epoxide; and, from about 0.01 to about 10 parts by weight of a photoinitiator. A synthetic reinforcing cord product for vulcanizable rubber includes a plurality of strands of synthetic fiber; and, an ultraviolet light curable coating composition on said plurality of strands comprising 100 parts by weight of an ultraviolet light curable, liquid epoxide, and from about 0.01 to about 10 parts by weight of a photoinitiator. A method of reinforcing articles of vulcanizable rubber with fibrous members includes the steps of applying to the fibrous member an ultraviolet light curable coating composition which includes 100 parts by weight of an ultraviolet light curable, liquid epoxide, and from about 0.01 to about 10 parts by weight of a photoinitiator; curing the applied coating composition by exposing it to ultraviolet light radiation; embedding the cured, coated fibrous member in the vulcanizable rubber; and, vulcanizing the rubber.

EP 0 541 107 A1

## EP 0 541 107 A1

## TECHNICAL FIELD

The present invention is directed toward improving the adhesion and adhesion retention between a rubber composition, used in the manufacture of tires, conveyor belts, hoses and the like, and synthetic fiber reinforcement cord, such as Polyester, which is embedded in the rubber stock. Flat sheets of such stocks, reinforced with fibers, are utilized as plies or other components of articles such as tires, belts, hoses and the liked and are referred to in the art as rubber skim stocks. Skim refers to a relatively thin layer or coating of the rubber composition over the reinforcing filaments or cords.

In order to obtain the improved adhesion, a novel ultraviolet light curable, adhesive active finish has been developed which is applied to the fiber cord reinforcement as a coating and then activated or cured by exposure to light prior to its incorporation into the rubber stock. The cured, coated fiber cord according to the invention, exhibits improved adhesion to the rubber. A method for treating a fiber cord reinforcement is also set forth.

## BACKGROUND ART

In order to promote adhesion between rubber compositions and their synthetic fiber reinforcement, it is known to add various compounds to the rubber and to employ one or more coatings of material to the fiber which will allow the fiber to become more firmly bonded to the rubber. Present technology has provided various combinations of coatings and additives which may be utilized together to form the rubber – fiber reinforced article. In such instances, the fiber coating should be capable of bonding to one or more components or active groups present in the rubber stock, particularly the adhesion promoting additives. As noted hereinabove, the present invention is directed toward adhesive active coatings for the fiber re – inforcement member, and thus, additives to the rubber stock do not constitute an element of the invention.

Adhesives that are employed in the tire and rubber industries are crosslinked polymeric three dimensional networks. They are used to join a reinforcing fabric such as cotton, rayon, nylon, polyester or aramid and an elastomer or blend of elastomers. The elastomers are suitably compounded such that the final cured reinforced rubber product will provide an acceptable level of performance.

The principal reinforcements used in rubber products are rayon, nylon, or polyester, alone or in combination with fiberglass, steelcord or aramid. Polyester such as polyethylene terephthalate, or PET, is presently displacing nylon, cotton and rayon as reinforcement material in belt and hose products and is therefore a good candidate for adhesive active coatings.

Since 1935, dip systems comprising resorcinol – formaldehyde and rubber latex, or RFL, have been the systems of choice for many reinforced rubber products, with the first commercial application being use in combination with rayon tirecord.

RFL dip systems can be used on polyester, but in order to achieve acceptable total performance, modifications are necessary. One such modification is taught by U.S. Patent No. 3,318,750 which provides an adhesive composition to dip coat fibrous materials for reinforcing vulcanizable rubber. The composition comprises 5 to 50 parts by weight of an aqueous solution and 50 to 95 parts by weight of a rubber latex. The aqueous solution contains 5 to 60 percent by weight of a reaction product of formaldehyde and acetaldehyde with a composition derived from the reaction of triallyl cyanurate and a polyhydric alcohol. The method taught is practiced by applying to reinforcing cord a finish of aldehyde, unsaturated aliphatic ester of cyanuric acid and a polyhydric alcohol and then a finish of a rubbery latex – resorcinol – formaldehyde dispersion.

This technology was also published in a paper entitled "New Polyester Dip System Results in Improved Adhesion and Processing Costs Reduction" presented to the Division of Rubber Chemistry, ACS, 119th Meeting, Paper No. 23(1981). It describes a water soluble complex reaction product, called N – 3, which contains the cyanurate component set forth in U.S. Patent No. 3,318,750. Usefulness of the product is attributable to the fact that it provides better adhesion between polyester and rubber than an RFL coating alone. Also it can be used directly with the RFL composition, for a one dip process or, the RFL can be applied thereover in a two dip process.

Another approach has been the coating of polyester fibers with epoxy compounds which may also receive an RFL dip. Adhesion between the cured rubber and the reinforcing cord is thereby improved.

U.S. Patent No. 4,446,307 provides a stable adhesive composition based upon a polyfunctional epoxide and a catalyst selected from the group consisting of tertiary amines, quaternary ammonium salts, quaternary phosphonium salts and triphenylphosphine. An aqueous solution of the adhesive is applied to the reinforcing filament which is subsequently incorporated with a rubber compound into a ply.

EP 0 541 107 A1

U.S. Patent No. 4,477,497 provides a method of manufacturing polyester fibers having good adhesion to rubber which involves applying an adhesive finish composition to the fiber and then heat treating. The finish comprises a lubricant, an epoxy compound and a novolak resin.

U.S. Patent No. 4,536,526 also provides a method as well as a finish composition. The latter comprises a lubricant, at least 80 weight percent of which is an ester of thiodicarboxylic acid; an epoxy resin and a surfactant. The method calls for the application of the finish to the polyester fiber followed by heat treatment.

U.S. Patent No. 4,847,360 discloses an adhesive active finish composition which includes a trialkanolamine, such as triethanolamine, as a chemical cure agent.

It has been found that adhesive active finishes which employ a chemical curing agent often exhibit decreased shelf of "pot" life due to premature curing. Once the curing agent has been mixed with the coating, curing will begin to take place. Hence, it has proven difficult if not impossible to produce a complete coating composition. Rather, it has been necessary to produce the coating composition packaged separately from the curing agent.

Furthermore, difficulties have arisen with heat curable compositions. Care must be taken that the curing temperatures do not degrade the reinforcing fiber itself, and that the adhesive bonding ability of the coating composition is not degraded due to the increase in temperature.

Unlike coating technology employed heretofore, the present coating compositions do not require heat to cure the coating compositions applied to the fibers. The pot life of the product is thus increased, and the fiber-to-rubber adhesion is not deleteriously affected by premature curing. Because the coatings according to the invention are cured by ultraviolet light, they may be applied at relatively lower temperatures than heat cured coatings, which avoids damage to the coating and the fiber.

**SUMMARY OF THE INVENTION**

It is therefore, an object of the present invention, to provide an adhesive active finish for fiber reinforcement members used to reinforce a rubber stock.

It is another object of the present invention, to provide an adhesive active finish, as above, which is curable by exposure to ultraviolet light radiation.

It is a further object of the present invention to provide an adhesive active finish, as above, wherein all of the ingredients may be mixed and stored indefinitely without premature curing.

It is still another object of the invention to provide a method of coating a fiber reinforcing element for a rubber stock, which does not employ heat curing to cure the coating.

It is yet another object of the invention to provide a method of applying a cured adhesive active finish to a fiber reinforcing member at ambient temperatures.

In general, the present invention provides an ultraviolet light curable, adhesive active finish composition for synthetic reinforcing members to bond the latter to vulcanizable rubber compositions which comprises 100 parts by weight of an ultraviolet light curable, liquid epoxide, and from about 0.01 to about 10 parts by weight of a photoinitiator.

The invention, in one aspect, provides a synthetic reinforcing cord product for vulcanizable rubber which comprises a plurality of strands of synthetic fiber, and an ultraviolet light curable coating composition comprising 100 parts by weight of an ultraviolet light curable, liquid epoxide, and from about 0.01 to about 10 parts by weight of a photoinitiator.

A method of reinforcing articles of vulcanizable rubber with fibrous members is also provided which comprises the steps of applying to the fibrous member an ultraviolet light curable coating composition. The coating composition comprises 100 parts by weight of an ultraviolet light curable, liquid epoxide, and from about 0.01 to about 10 parts by weight of a photoinitiator. The method also comprises the steps of curing the applied coating by exposing it to ultraviolet light radiation; embedding the cured, coated fibrous member in the vulcanizable rubber; and, vulcanizing the rubber.

At least one or more of the foregoing objects, together with the advantages thereof over the known art relating to adhesive active finishes for fiber reinforcing elements for rubber compositions, which shall become apparent from the specification which follows, are accomplished by the invention as hereinafter described and claimed.

**PREFERRED EMBODIMENT FOR CARRYING OUT THE INVENTION**

Synthetic reinforcing filaments or cord utilized in rubber articles include such polymers as rayon, the nylons, the aramids, polyester and the like. The adhesive active finish composition of the present invention

3

has been found to be highly suitable with polyester cord, such as polyethylene terephthalate cord with which this invention has been exemplified herein. Nevertheless, it can also have utility with other reinforcing cords such as those discussed hereinabove, and therefore, its use as a finish coating should not be limited to polyesters alone.

The adhesive composition comprises an ultraviolet light radiation curable composition of a liquid epoxide and a photoinitiator. Preferably, the composition comprises 100 parts by weight of the epoxide and from about 0.01 to about 10 parts by weight of the photoinitiator.

Useful liquid epoxides include any which may be cured upon exposure to ultraviolet light radiation. For example, cycloaliphatic epoxides, aliphatic epoxides, glycidyl ethers of aromatic or aliphatic polyols and, polymeric polyepoxides are all within the scope of the invention. The cycloaliphatic epoxides that can be employed have from about 8 to about 40 carbon atoms; the aliphatic epoxides that can be employed have from about 4 to about 40 carbon atoms; the glycidyl ethers of aromatic or aliphatic polyols that can be employed have from about 12 to about 50 carbon atoms and the polymeric epoxides that can be employed have from about 50 to about 1000 carbon atoms. Representative examples of such compounds include triglycidyl glycerol; tetraglycidyl pentaerythritol; hexaglycidyl sorbitol; glycidyl ethers of bis−phenol A; vinyl cyclohexene dioxide; 1,2,7,8−diepoxy octane 3,4−epoxy cyclohexylmethyl 3,4−epoxy cyclohexane carboxylate; bis−[3,4−epoxy cyclohexylmethyl] adipate; bis−[3,4−epoxy 6 methyl cyclohexylmethyl] adipate; epoxidized unsaturated oils such as linseed, soybean and the like; epoxidized diene polymers including natural rubber, butadiene and butadiene−styrene rubber (SBR) and the like, including mixtures of the foregoing.

It is also preferred to employ a photoinitiator to initiate curing. Useful photoinitiators include arylsulfonium salts, having from about 18 to 30 carbon atoms; aryliodonium salts having from about 12 to 30 carbon atoms; and aryldiazonium salts having from about 6 to 30 carbon atoms. The aryl moiety of such salts that can be employed include phenyl, tolyl, xylyl, alkyl phenyl and the like. These salts also require a counter ion such as a phosphorus, arsenic or antimony hexafloride.

In the manufacture of synthetic reinforcing materials for rubber, the individual fiber is first formed. A large number of fibers are gathered together to form the yarn. Subsequently, a desired number of yarn plies, *e.g.*, 3, are twisted together to form the cord. The adhesive active finish composition can be applied by any suitable apparatus that essentially coats the cord with the finish. If a solvent is present, the cord must be allowed to dry. Drying can be conducted at elevated temperatures so long as these remain below the temperature at which heat stabilized properties would suffer. The cord can also be subjected to an optional heating step before the finish is applied in order to remove any possible moisture. This heating should also not be high enough to cause any loss of properties of the cord.

It is also possible to apply the adhesive active finish composition to the fiber or cord. However, for ease of discussion, reference shall be made throughout the specification to cord with the understanding that fibers and cord are also contemplated. Generally, the three can be identified as the synthetic reinforcing member.

The coated cord is then exposed to ultraviolet light radiation to cure the coating composition and encapsulate the cord, in order to bond the finish to the cord. The coated cord is then useful for incorporation into a rubber skim stock as a reinforcing member.

Before being incorporated into the rubber skim stock, the coated, cured cord may be provided with a second coating comprising an RFL composition, preferably by dipping, as known in the art. As previously noted, the RFL composition is known to comprise basically resorcinol, formaldehyde and a rubber latex such as vinylpyridine styrene−butadiene−rubber. Inasmuch as these dip coating compositions are common and known in the art, the particular components and amounts thereof are not necessarily critical to the practice of the method of the present invention which generally provides that a second coating of this composition may be applied before the cord becomes embedded in the vulcanizable rubber stock. Thus, the RFL coating is optional for those rubber stocks based upon unsaturated rubbers; however, without unsaturation, the RFL coating would be necessary.

As to the vulcanizable rubber composition that can be reinforced with the cord product of the present invention, it can comprise natural rubber in either a pure or blended state with synthetic rubbers such as styrene−butadiene, butyl, ethylene−propylene−diene, halobutyls, synthetic isoprene or other synthetic rubbers. Further, pure forms of synthetic rubbers such as those disclosed above can be used either alone or blended with other synthetic rubbers.

As will be appreciated by one skilled in the art, various additives such as flexibilizers, stabilizers, antioxidants, lubricants, thickeners, fillers, pigments, surfactants and the like, may be added to compositions according to the present invention, without departing from the scope thereof.

4

To demonstrate the practice of the present invention, several adhesive active finishes were prepared, as described hereinbelow, and then used to coat strands of polyethylene terephthalate fiber cord. A chemical cure composition was also used to provide a control composition for comparison.

## Preparation of Adhesive Active Finish

Four (4) coating compositions were prepared as will be discussed hereinbelow. Formulations 1 – 3 were prepared according to the present invention and Formulation 4 was prepared as a control composition. Formulations 1 – 3 were cured by exposure to ultraviolet light, while Formulation 4 was chemically cured.

### Formulation 1

One hundred (100) parts by weight of a liquid cycloaliphatic epoxide, UVR6100(1,2,7,8 – diepoxy octane 3,4 – epoxy cyclohexylmethyl 3,4 – epoxy cyclohexane carboxylate) available from Union Carbide, was mixed with 3 parts by weight of an arylsulfonium salt, UVI 6974 also available from Union Carbide.

### Formulation 2

Fifty (50) parts by weight of the liquid cycloaliphatic epoxide as used in Formulation 1 was mixed with 3 parts by weight of the arylsulfonium salt as also used in Formulation 1, together with 50 parts by weight of a polyester polyol flexibilizer, namely TONE 0305 available from Union Carbide.

### Formulation 3

One hundred (100) parts by weight of triglycidyl glycerol was mixed with 3 parts by weight of the arylsulfonium salt as used in Formulation 1.

### Formulation 4

The control formulation included 100 parts by weight of triglycidyl glycerol mixed with 13 parts by weight of triethanolamine as a chemical curing agent.

Each of the Formulations 1 to 4 was coated onto polyethylene terephthalate cord (1000/3) using a cross – channeled applicator die. Each coated cord was measured by analytical titration for the weight percent of coating applied to the cord. It was found that the cord picked up about 0.20 weight percent of Formulation 1; about 0.41 weight percent of Formulation 3; and, about 0.40 weight percent of Formulation 4. The weight percent of Formulation 2 picked up by the cord was not measured but would have ranged between about 0.2 and 0.4 weight percent.

Each cord coated with Formulations 1 and 3 was then exposed to high intensity ultraviolet light radiation (200 to 400 nm) at a line speed (that is, the speed at which the cord was moved past the light source) of about 20 feet per minute. To expose the cords to ultraviolet light radiation, a UVXL Processor from RCP Industries was employed. This unit is provided with low, medium and high settings, corresponding to an energy output of respectively, 100,200 and 300 watts per inch. After exposure, the amount of unreacted epoxy groups was determined, according to the procedure of R.R. Jay, Anal. Chem. 36, 667 – 668 (1964) "Direct Titration of Epoxy Compounds and Aziridines", and verified cure.

The cords coated with Formulations 1,3 and 4 were then top coated with a conventional RFL coating. The second coating was applied to the cords using a Litzler Computreater, according to the treating conditions reported in TABLE I hereinbelow.

TABLE I

| RFL COATING CONDITIONS | | | | |
|---|---|---|---|---|
| ZONE | TEMP, °F | TIME, SEC. | STRETCH, % | TENSION, LBS. |
| 1 | 250 | 55 | + 1 | 0.4 |
| 2 | 275 | 55 | + 2 | 2.2 |
| 3 | 420 | 90 | − 1 | 2.5 |

Identical portions of the dip treated cord samples were then embedded in two vulcanizable rubber compounds, designated herein as Stock R1 and Stock R2, in a configuration for evaluation by standard U-adhesion testing, which measured the force required to pull the sample from a section of the vulcanized rubber. The compositions of Stock R1 and Stock R2 are reported in TABLE II hereinbelow, with all parts given on the basis of parts by weight per hundred parts of rubber (phr) by weight. Stock R1 contained a melamine resin adhesion promoter.

TABLE II

| VULCANIZABLE RUBBER COMPOSITIONS | | |
|---|---|---|
| Ingredients | Stock R1 | Stock R2 |
| SBR | 50 | 50 |
| Natural Rubber | 50 | 50 |
| Oil | 12 | 9 |
| Carbon Black | 75 | 75 |
| Zinc Oxide | 3 | 3 |
| Stearic acid | 1 | 1 |
| Tackifier | 14 | 17 |
| Accelerator | 1.9 | 1.9 |
| Sulfur | 2.3 | 2.3 |
| Melamine Resin | 4.17 | – – |
| **Total** | 213.37 | 209.3 |

The U-Adhesion tests were conducted according to the procedures as set forth in ASTM D2138, Vol. 09.01. The coated and cured fiber cords were embedded in the rubber stock, whereupon the rubber was vulcanized by conventional methods.

The results of the adhesion testing have been presented in TABLE III hereinbelow. The force necessary to pull or remove the cord reinforcement from the vulcanized rubber skim stock is given first, in pounds, followed by the percent of rubber skim stock remaining on the surface of the cord reinforcement. The amount of rubber skim stock remaining on the cord reinforcement was determined by visual examination and has been reported as "percent rubber coverage". For comparison, Formulation No. 4 was cured chemically with triethanolamine as described in our U.S. Pat. No. 4,847,360, the subject matter of which is incorporated herein by reference.

TABLE III

| U-ADHESION TEST RESULTS | | | | | |
|---|---|---|---|---|---|
| Formulation No. | UVXL Exposure Setting | U-Adhesion Pull Force, Lbs. | | Percent Rubber Coverage | |
| | | Stock R1 | Stock R2 | Stock R1 | Stock R2 |
| 1 | Low | 46.9 | 41.0 | 90-95 | 90-95 |
| 1 | Medium | 44.0 | 38.5 | 90-95 | 80-90 |
| 1 | High | 46.0 | 41.3 | 90-95 | 70-90 |
| 3 | Low | 48.2 | 38.3 | 90-95 | 90-95 |
| 3 | High | 44.0 | 35.5 | 90-95 | 80-90 |
| 4 | None | 43.0 | 43.3 | 90-95 | 90-95 |

a) Chemical cure

From the results reported in TABLE III, it can be seen that reinforcing cord according to the present invention, as used with both Stock RI and Stock R2, provided comparable performance to the reinforcing cords with a chemically cured coating.

The rubber coverage measurement is deemed to be significant in that it visually represents the increased adhesion of the rubber composition to the reinforcing cord. As is well known to those skilled in the art, the amount of rubber remaining on the cord after it has been pulled from a cured rubber pad represents the relationship of the adhesive force attaching the rubber composition to the surface of the cord and the tensile strength of the rubber composition itself. Large percentages of rubber coverage indicate that the adhesion to the cord exceeds the cohesive strength of the rubber composition itself. Therefore, when the rubber coverage is very high it can be concluded that the cord to rubber adhesion strength is greater than the force measured to pull the cord out of the rubber pad since the force measured was a result of the rubber composition itself rupturing and not the breakage of chemical bonds formed at the cord rubber interface.

Based upon the foregoing results, it should be evident that the adhesive active finish of the present invention improves adhesion between vulcanizable rubber and polyester cord. Moreover, the coated cord has been demonstrated to have improved utility when used in the method of reinforcing rubber articles.

It is to be understood that the foregoing examples have been provided to enable those skilled in the art to have representative examples by which to evaluate the invention and that these examples should not be construed as any limitation on the scope of this invention. Inasmuch as the composition of the adhesive active finish employed in the present invention can be varied within the scope of the total specification, neither the particular components nor the relative amounts of the components exemplified herein shall be construed as limitations of the invention. Similarly, the present invention should not be limited to the treatment of polyester cord nor to any specific RFL coating layer in the method for reinforcing vulcanizable rubber articles.

In conclusion, it is to be understood that all methods, compounds and synthetic fibers disclosed herein fall within the scope of the claimed invention. As will be apparent to those skilled in the art, the formulation of the adhesive active composition can be varied within the scope of the total specification disclosure by selection of various epoxides and photoinitiators, as well as relative amounts thereof, and it is believed that the practice of the present invention can be determined without departing from the spirit of the invention herein disclosed and described, the scope of the invention being limited solely by the scope of the attached claims.

## Claims

1. An ultraviolet light curable, adhesive active finish composition for synthetic reinforcing members to bond the latter to vulcanizable rubber comprising:
   100 parts by weight of an ultraviolet light curable, liquid epoxide; and,
   from about 0.01 to about 10 parts by weight of a photoinitiator.

2. An adhesive active finish composition as set forth in claim 1, wherein said liquid epoxide is selected from the group consisting of cycloaliphatic epoxides, aliphatic epoxides, glycidyl ethers of aromatic or aliphatic polyols and, polymeric polyepoxides.

3. An adhesive active finish composition as set forth in claim 2, comprising
   100 parts by weight of 1,2,7,8 – diepoxy octane 3,4 – epoxy cyclohexylmethyl 3,4 – epoxy cyclohexane carboxylate; and,
   about 3 parts by weight of said photoinitiator.

4. An adhesive active finish composition as set forth in claim 2, comprising
   100 parts by weight of triglycidyl glycerol; and,
   about 3 parts by weight of said photoinitiator.

5. An adhesive active finish composition as set forth in claim 1, wherein said photoinitiator is selected from the group consisting of arylsulfonium salts, having from about 18 to 30 carbon atoms; ar – yliodonium salts having from about 12 to 30 carbon atoms; and aryldiazonium salts having from about 6 to 30 carbon atoms.

6. A synthetic reinforcing cord product for vulcanizable rubber comprising:
   a plurality of strands of synthetic fiber; and,
   an ultraviolet light curable coating composition on said plurality of strands comprising
   100 parts by weight of an ultraviolet light curable, liquid epoxide, and

from about 0.01 to about 10 parts by weight of a photoinitiator.

7. A coated reinforcing member as set forth in claim 6, wherein said synthetic fiber is selected from the group consisting of polyester fibers.

8. A coated reinforcing member as set forth in claim 7, wherein said polyester fiber is polyethylene terephthalate.

9. A coated reinforcing member as set forth in claim 6, wherein said liquid epoxide is selected from the group consisting of cycloaliphatic epoxides, aliphatic epoxides, glycidyl ethers of aromatic or aliphatic polyols and, polymeric polyepoxides.

10. A coated reinforcing member as set forth in claim 9, comprising
    100 parts by weight of 1,2,7,8 – diepoxy octane 3,4 – epoxy cyclohexylmethyl 3,4 – epoxy cyclohexane carboxylate; and,
    about 3 parts by weight of said photoinitiator.

11. A coated reinforcing member as set forth in claim 9, comprising
    100 parts by weight of triglycidyl glycerol; and,
    about 3 parts by weight of said photoinitiator.

12. A coated reinforcing member as set forth in claim 6, wherein said photoinitiator is selected from the group consisting of arylsulfonium salts, having from about 18 to 30 carbon atoms; aryliodonium salts having from about 12 to 30 carbon atoms; and aryldiazonium salts having from about 6 to 30 carbon atoms.

13. A method of reinforcing articles of vulcanizable rubber with fibrous members comprising the steps of:
    applying to the fibrous member an ultraviolet light curable coating composition comprising 100 parts by weight of an ultraviolet light curable, liquid epoxide, and from about 0.01 to about 10 parts by weight of a photoinitiator;
    curing said applied coating composition by exposing it to ultraviolet light radiation;
    embedding said cured, coated fibrous member in the vulcanizable rubber; and,
    vulcanizing the rubber.

14. A method, as set forth in claim 13, wherein said liquid epoxide is selected from the group consisting of cycloaliphatic epoxides, aliphatic epoxides, glycidyl ethers of aromatic or aliphatic polyols and, polymeric polyepoxides.

15. A method, as set forth in claim 13, wherein the amount of 1,2,7,8 – diepoxy octane 3,4 – epoxy cyclohexylmethyl 3,4 – epoxy cyclohexane carboxylate employed is 100 parts by weight of and the amount of said photoinitiator employed is about 3 parts by weight in said step of applying.

16. A method, as set forth in claim 13, wherein the amount of said triglycidyl glycerol employed is 100 parts by weight of and the amount of said photoinitiator employed is about 3 parts by weight in said step of applying.

17. A method, as set forth in claim 13, wherein said photoinitiator is selected from the group consisting of arylsulfonium salts, having from about 18 to 30 carbon atoms; aryliodonium salts having from about 12 to 30 carbon atoms; and aryldiazonium salts having from about 6 to 30 carbon atoms.

18. A method, as set forth in claim 13, further comprising the additional step of applying a second coating comprising resorcinol, formaldehyde and rubber latex over said coating, prior to said step of embed – ding.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 058 401 (J.V. CRIVELLO)<br>* claims 1,2,9,12 *<br>* column 4, line 13 - column 4, line 28 *<br>* column 5, line 24 - column 5, line 37 *<br>--- | 1-3,5 | C08J5/06<br>C08L63/00<br>D06M15/55 |
| X | DATABASE WPIL<br>Section Ch, Week 8518,<br>Derwent Publications Ltd., London, GB;<br>Class A81, AN 85-107765<br>& JP-A-60 051 770 (TOYO INK MFG KK)<br>* abstract *<br>--- | 1-3,5 | |
| X | EP-A-0 429 250 (MINNESOTA MINING AND MANUFACTURING COMPANY)<br>* claims 1-4 *<br>* page 4, line 6 - page 5, line 20 *<br>--- | 1-3,5,6 | |
| X<br>Y | US-A-4 378 277 (G.H. SMITH)<br><br><br>* claims 1-3,13 *<br>* column 4, line 3 - column 4, line 46 *<br>* column 5, line 47 - column 5, line 55 *<br>* column 6, line 3 - column 6, line 13 *<br>* examples 1-6,26 *<br>--- | 1-3,5<br>6-10,<br>12-15,<br>17,18 | |
| Y | US-A-4 514 438 (G. E. GILLBERG-LAFORCE)<br><br><br>* claims 1,2,11 *<br>* column 5, line 6 - column 5, line 21 *<br>* column 5, line 45 - column 5, line 57 *<br>--- | 6-10,<br>12-15,<br>17,18 | |
| A | WO-A-8 403 707 (VISCOSUISSE SA)<br><br>* claims 1-3 *<br><br>----- | 6-9,11,<br>13,14,16 | |

**TECHNICAL FIELDS SEARCHED (Int. Cl.5 )**

C08J
C09J
C08L

The present search report has been drawn up for all claims

| Place of search | Date of completion of the search | Examiner |
|---|---|---|
| THE HAGUE | 04 MARCH 1993 | HALLEMEESCH A.D |

EPO FORM 1503 03.82 (P0401)